**Europäisches Patentamt**

**European Patent Office**

**Office européen des brevets**

(19)

(11) Veröffentlichungsnummer: **0 377 059**

**A1**

(12) ## EUROPÄISCHE PATENTANMELDUNG

(21) Anmeldenummer: **89100022.6**

(22) Anmeldetag: **02.01.89**

(51) Int. Cl.⁵: **B29C 47/20, B29C 47/00**

(43) Veröffentlichungstag der Anmeldung:
**11.07.90 Patentblatt 90/28**

(84) Benannte Vertragsstaaten:
**CH DE FR IT LI NL SE**

(71) Anmelder: **INSTITUT MEKHANIKI METALLOPOLIMERNYKH SISTEM AKADEMII NAUK BELORUSSKOI SSR**
**Ulitsa Kirova, 32a**
**Gomel(SU)**

(72) Erfinder: **Liberman, Semen Yankelievich**
**ulitsa B. Khmelnitskogo, 108, kv. 27**
**Gomel(SU)**
Erfinder: **Vertyachikh, Igor Mikhailovich**
**ulitsa P. Brovki, 25, kv. 84**
**Gomel(SU)**
Erfinder: **Goldade, Viktor Antonovich**
**ulitsa Kozhara, 5, kv. 30**
**Gomel(SU)**
Erfinder: **Pinchuk, Leonid Semenovich**
**ulitsa Petchenko, 14, kv. 17**
**Gomel(SU)**
Erfinder: **Rechits, Grigory Vladimirovich**
**ulitsa Fedjuninskogo, 6, kv. 88**
**Gomel(SU)**

(74) Vertreter: **Finck, Dieter et al**
**Patentanwälte v. Füner, Ebbinghaus, Finck**
**Mariahilfplatz 2 & 3**
**D-8000 München 90(DE)**

(54) **Spritzkopf zur Herstellung einer polymeren Rostschutz-Schlauchfolie.**

(57) Der Spritzkopf zur Herstellung einer polymeren Rostschutz-Schlauchfolie, hat eine Hohlkörper (1) mit einem Mundstück (3), einen im Hohlkörper (1) angeordneten und durch das Mundstück (3) geführten Hohldorn (4) und einen formgebenden Kanal (5), der in einen Ringspalt (6) übergeht. In der Zone des Spaltes (6) sind im Körper des Dornes (4) und des Mundstückes (3) Kammern (11, 12) vorgesehen, wobei die Kammer (11) mit einem Kanal (25) zum Zuführen eines Korrosionsinhibitors in Verbindung steht. Im Hohlraum (13) des Dornes (4) ist ein Rohr (14) zum Zuführen der Druckluft angeordnet, mit welcher die polymere Schmelze zu einem Folienschlauch (15) aufgeblasen wird. An einem der Roh-renden ist eine Schnecke (16) mit einer tangentialen Düse (17) zum Zuführen der Druckluft befestigt. Die Schnecke (16) weist eine Blende in Form eines zu dieser koaxial angeordneten Konfusors (18) aufweist, der mit der Kammer (12) des Mundstückes (3) in Verbindung steht. Das andere Ende des Rohres (14) ist in Form eines Schlitzdiffusors (21) ausgebildet.

EP 0 377 059 A1

1a

## SPRITZKOPF ZUR HERSTELLUNG EINER POLYMEREN ROSTSCHUTZ-SCHLAUCHFOLIE

Die Erfindung bezieht sich auf Vorrichtungen zur Herstellung von polymeren Korrosionsschutzmaterialien, mit deren Hilfe Metallerzeugnisse gegen atmosphärische Einwirkung und aggressive Medien isoliert werden, und bestrifft insbesondere einen Spritzkopf zur Herstellung einer polymeren Rostschutz- Schlauchfolie.

Es ist ein Spritzkopf zur Herstellung einer polymeren Rostschutz-Schlauchfolie (SU, A, 859178) bekannt, der ein Gehäuse und einen in diesem angeordneten Hohldorn enthält, dessen Wände einen formgebenden Kanal bilden. Im Hohlraum des Dornes ist koaxial zu diesem ein über die Stirn des Dornes vorstehender Einsatz angeordnet, der mit einem Kanal für die Zuführung einer mit feindispersem Pulver gesättigten Druckluft versehen ist. Der vorstehende Teil des Einsatzes weist radiale Bohrungen auf, die mit dem genannten Kanal in Verbindung stehen. Aus dem Extruder wird die Polymerisatschmelze in den formgebenden Kanal des Spritzkopfes zugeführt und am Austritt aus diesem mit der mit Pulver gesättigten Druckluft, die aus dem Kanal des Dornes durch die radialen Bohrungen eingeleitet wird, zu einem Folienschlauch aufgeblasen.

Der Spritzkopf einer solchen Konstruktion gewährleistet die erforderlichen Korrosionsschutzeigenschaften der Schlauchfolie nicht, weil ein Teil des Pulvers beim Auftragen abbröckelt und die Inhibition ungleichmäßig vor sich geht. Außerdem ist die Sättigung der Folie mit einem pulverförmigen Inhibitor erschwert, da dieser in das Folienvolumen praktisch nicht diffundiert und sich lediglich an der Oberfläche absetzt.

Es ist ein Spritzkopf zur Herstellung einer polymeren Rostschutz-Schlauchfolie bekannt (SU, A, 722779), enthaltend einen Hohlkörper mit einem Mundstück, einen im Hohlkörper angeordneten und durch das Mundstück geführten Dorn, dessen Außenfläche sowie die Innenflächen des Hohlkörpers und des Mundstückes einen formgebenden Kanal bilden, der in einen Ringspalt übergeht, in dessen Zone im Körper des Dornes und des Mundstückes mit ihrem offenen Teil einander zugewandte Ringnuten ausgeführt sind, in dennen Buchsen aus einem für Korrosionsinhibitor oder für dessen Lösung in einem Plastifizierungsmittel durchlässigen Werkstoff untergebracht sind, wobei die Innenwände dieser Buchsen und die Wände der Nuten Kammern bilden. Im Hohlkörper und im Dorn sind Kanäle vorgesehen, welche jeweils mit den Kammern des Mundstückes und des Dornes in Verbindung stehen und zum Zuführen einer Schmierflüssigkeit in diese dienen, und im Körper des Dornes ist ein Kanal zum Zuführen der Druckluft ausgeführt, mit welcher die Polymerisatschmelze zu einem Folienschlauch aufgeblasen wird.

In die Polymerisatschmelze, die aus dem Extruder in den formgebenden Kanal zugeführt wird, wird beim Durchgehen derselben durch den Ringspalt aus den Kammern des Mundstückes und des Dornes eine Schmierflüssigkeit unter Druck eingeleitet, die eine gleichmäßige Schicht an der Oberfläche der Schmelze über die Länge dieses Spaltes bildet. Die Polymerisatschmelze, die aus dem Extruder zugeführt wird, stellt ein Gemisch aus einem Thermoplast und einem Korrosionsinhibitor dar.

Durch die Verwendung eines Schmiermittels wird es möglich, die Reibungszahl bei der Reibung der Thermoplastschmelze an den Spaltwänden zu vermindern und Thermoplaste mit hohem Füllstoffanteil zu verarbeiten. Die Schmierflüssigkeit übt keinen Einflüß auf die Korrosionsschutzeigenschaften der Folie aus. Die mittels eines solchen Spritzkopfes hergestellte Schlauchfolie weist den erforderlichen Komplex von Korrosionsschutzeigenschaften nicht auf, weil der Korrosionsinhibitor in verkapselter Form im Thermoplat vorliegt und dessen Abscheidung in das Schlauchvolumen erschwert ist, d.h. die Qualität der Schlauchfolie ist in diesem Fall nicht hochwertig.

Der Erfindung liegt die Aufgabe zugrunde, einen Spritzkopf zur Herstellung einer polymeren Rostschutz-- Schlauchfolie zu entwicklen, der mit einem solchen System zum Zuführen des Korrosionsinhibitors in die Polymerisatschmelze und der Druckluft zum Aufblasen dieser Polymerisatschmelze zu einem Folienschlauch versehen ist, welches durch eine Intensivierung der Diffusionsvorgänge, die zwischen der Polymerisatschmelze und dem Korrosionsinhibitor stattfinden, eine Verbesserung von Korrosionsschutzeigenschaften der herzustellenden Schlauchfolie unter Erhaltung von hohen physikalisch-mechanischen Kennziffern derselben gewährleistet.

Diese Aufgabe wird dadurch gelöst, daß beim Spritzkopf zur Herstellung einer polymeren Rostschutz-Schlauchfolie, enthaltend einen Hohlkörper mit einem Mundstück, einen im Hohlkörper angeordneten und durch das Mundstück geführten Dorn, dessen Außenfläche sowie die Innenflächen des Hohlkörpers und des Mundstückes einen formgebenden Kanal bilden, der in einen Ringspalt übergeht, in dessen Zone im Körper des Dornes und des Mundstückes mit ihrem offenen Teil einander zugewandte Ringnuten ausgeführt sind, in denen Buchsen aus einem für Korrosionsinhibitor oder für dessen Lösung in einem Plastifizierungsmittel durchlässigen Werkstoff untergebracht sind, wobei die Innenwände dieser Buchsen und die Wände der Nuten Kammern bilden, erfindungsgemäß, im Dorn ein Hohlraum vorgesehen ist, in dem koaxial zum Dorn ein zylinderförmiges Rohr zum Zuführen der Druckluft angeordnet ist, mit der die Polymerisatschmelze zu einem Folienschlauch aufgeblasen wird, an einem der Rohrenden mit ihrer einen Stirn eine mit dem Rohr in Verbindung stehende und koaxial zu diesem angeordnete Schnecke befestigt ist, die mindestens eine tangentiale Düse zum Zuführen der Druckluft aufweist, wobei an der anderen vom Rohr entfernten Stirn der Schnecke eine Blende in Form eines koaxial zu dieser angeordneten Konfusors montiert ist, welcher mit der Mundstückkammer verbunden ist, während das andere Rohrende in Form eines Diffusors ausgebildet und mit einer senkrecht zur Rohrachse angeordneten Blindwand versehen ist, die mit der Diffusorwand einen Schlitz bildet, wobei im Dorn mindestens ein mit dessen Kammer in Verbindung stehender Kanal zum Zuführen eines Korrosionsinhibitors oder seiner Lösung in einem Plastifizierungsmittel in diese Kammer vorgesehen ist.

Durch die Verwendung einer solchen Konstruktion des Spritzkopfes werden eine Vergrößerung der Eindringtiefe und eine gleichmäßige Verteilung des Korrosionsinhibitors in der Polymerisatschmelze sowie die Formung einer solchen Struktur der Schlauchfolie gewährleistet, bei der die Abscheidung dieses Inhibitors nur auf der Seite der Innenfläche des Folienschlauches stattfindet, was die Korrosionsschutzeigenschaften der Schlauchfolie bedeutend verbessert. Diese Folie weist dank ihrer Struktur gute physikalisch-mechanische Eigenschaften auf.

Es ist zweckmäßig, zur Regelung der Größe des im Rohr entstehenden Vakuums die Blindwand in der Längsrichtung der Rohrachse verschiebbar auszuführen. Zur Optimierung der Wärmeaustauschprozesse, die unter den Bedingungen der Formung der Schlauchfolie verlaufen, ist es wünschenswert, daß ein Teil des Kanals zum Zuführen des Korrosionsinhibitors oder seiner Lösung in einem Plastifizierungsmittel in die Dornkammer von der Oberfläche des Dornhohlraumes sowie von der Außenfläche des Rohres gebildet ist, während dessen anderer Teil im Dornkörper ausgeführt ist.

Nachstehend wird ein Ausführungsbeispiel des erfindungsgemäßen Spritzkopfes zur Herstellung einer polymeren Rostschutz-Schlauchfolie mit Bezugnahme auf eine Zeichnung angeführt, in der die Gesamtansicht des Spritzkopfes im Längsschnitt schematisch dargestellt ist.

Der Spritzkopf enthält eine Hohlkörper 1, der an einen Extruder 2 angeschlossen ist, und ein daran montiertes Mundstück 3. Im Hohlkörper 1 ist ein Dorn 4 ange ordnet, der durch das Mundstück 3 geführt ist, wobei die Außenfläche des Dornes 4 mit der Innenfläche des Hohlkörpers 1 einen formgebenden Kanal 5 und mit der Innenfläche des Mundstückes 3 einen formgebenden Ringspalt 6 bildet. In der Zone des Spaltes 6 sind im Körper des Dornes 4 und des Mundstückes 3 mit ihrem offenen Teil einander zugewandte Ringnuten 7,8 vorgesehen. In den Ringnuten 7,8 sind Buchsen 9,10 aus einem für Korrosionsinhibitor oder für dessen Lösung in einem Plastifizierungsmittel durchlässigen Werkstoff, z.B. aus einem porösen metallkeramischen Werkstoff, untergebracht. Die Innenwände der Buchsen 9,10 und die Wände der Nuten 7,8 bilden eine Kammer 11 des Dornes 4 bzw. eine Kammer 12 des Mundstückes 3. Die Außenwände der Buchsen 9,10 stellen einen Teil der Wände des Mundstückes 3 dar. Im Dorn ein Hohlraum 13 vorgesehen, in dem koaxial zum Dorn 4 ein zylinderförmiges Rohr 14 zum Zuführen der Druckluft angeordnet ist, die das Aufblasen der Polymerisatschmelze zu einem Folienschlauch 15 besorgt. An einem der Enden des Rohres 14 ist mit ihrer einen Stirn eine mit diesem Rohr in Verbindung stehende und koaxial zu diesem angeordnete Schnecke 16 befestigt. Die Schnecke 16 weist mindestens eine tangentiale Düse 17 zum Zuführen der Druckluft auf. An der anderen vom Rohr 14 entfernten Stirn der Schnecke 16 ist eine Blende in Form eines koaxial zur Schnecke 16 angeordneten Konfusors 18 montiert, welcher mittels einer Rohrleitung 19 und eines Kanals 20, der im Körper des Mundstückes 3 ausgebildet ist, mit der Kammer 12 des letzteren verbunden ist. Das andere Ende des Rohres 14 ist in Form eines Diffusors 21 ausgebildet und mit einer senkrecht zur Rohrachse angeordneten Blindwand 22 versehen, die zusammen mit der Wand 23 des Diffusors 21 einen Spalt 24 bildet. Die Blindwand 22 ist in der Längsrichtung des Rohres 14 verschiebbar ausgeführt. Das zylinderförmige Rohr 14 bildet zusammen mit der Schnecke 16 und dem Diffusor 21 ein "Wirbel-Rohr" und dient als Kanal für die Druckluftzufuhr zum Aufblasen der Polymerisatschmelze zu einem Folienschlauch 15. Im Dorn 14 ist mindestens ein mit seiner Kammer 11 in Verbindung stehender Kanal 25 vorgesehen, der zum Zuführen eines Korrosionsinhibitors oder dessen Lösung in einem Plastifizierungsmittel in diese Kammer 11 dient. Ein Teil des Kanals 25 ist von der Oberfläche des Hohlraumes 13 des Dornes 4 und von der Außenfläche des Rohres 14 gebildet, während der andere Teil des Kanals 25 im Körper des Dornes 4 ausgebildet ist. Zur Abführung der Luft aus dem Hohlraum des Folienschlauches 15 ist im Körper des Dornes 4 ein Kanal 26 vorgesehen, der durch nicht gezeigte Abstandsbuchsen des Schlitzdiffusors 21 und des Dornes 4 geführt ist. Zur Abkühlung des herzustellenden Folienschlauches 15 ist oberhalb des Mundstückes 3 ein Ringsammler 27 angeordnet.

Der erfindungsgemäße Spritzkopf hat folgende Wirkungsweise:

Aus dem Extruder 2 wird die Polymerisatschmelze dem formgebenden Kanal 5 zugeführt, durch diesen gepreßt und in den formgebenden Ringspalt 6 geleitet. Beim Durchgang der Polymerisatschmelze durch den Spalt 6 wird sie von einem Korrosionsinhibitor oder von dessen Lösung in einem Plastifizierungsmittel beeinflußt, die aus dem Kanal 25 durch die Kammer 11 und die durchlässige Buchse 9 unter Druck zugeführt werden. Das Eindringen des Korrosionsinhibitors in das Volumen dieser Schmelze erfolgt nur auf der Seite der Innenfläche des Folienschlauches 15, der am Austritt aus dem Spritzkopf gebildet wird. Gleichzeitig wird in die tangentiale Düse 17 der Schnecke 16 Druckluft zugeführt. In der Schnecke 16 wird von der Luft eine intensive kreisförmige Strömung erzeugt, wobei ein auf diese Weise gebildeter Wirbel in das Rohr 14 gelangt. Es ensteht ein Wirbeleffekt, bei dem periphere Schichten des Luftstromes erwärmt werden, während die achsnahen Luftschichten bedeutend abgekühlt werden. Der Wirbel-Luftstrom tritt aus dem Schlitz 24 des Diffusors 21 unter einem Druck aus und bläst die Polymerisatschmelze, die aus dem Spalt 6 austritt, zu einem Folienschlauch 15 auf. Die erwärmten peripheren Schichten des Wirbel-Luftstromes geben ihre Wärme an den im Kanal 25 befindlichen Korrosionsinhibitor oder seiner Lösung in einem Plastifizierungsmittel ab, welche ihrerseits als Wärmeträger zur einer zusätzlichen Erwärmung des Dornes 4 dienen. Der Schlitzdiffusor 21 gewährleistet eine starke Drucksenkung an der Wirbelachse, was einen Effekt der Selbstevakuierung des "Wirbel -Rohres" 14 zur Folge hat. Da der Diffusor 21 mit einer Blindwand 22 versehen ist, findet ein Ansaugen der Luft in den achsnahen Bereich durch den Konfusor 18 der Schnecke 16 statt. Da der Konfusor 18 mittels der Rohrleitung 19 und des Kanals 20 mit der Kammer 12 des Mundstückes 2 in Verbindung steht, wird das Volumen dieser Kammer evakuiert und die zu extrudierende Schmelze wird durch die durchlässige Buchse 10 ebenfalls einer Evakuierung ausgesetzt. Das trägt erstens zu einer Entgasung der Polymerisatschmelze und zum Füllen der frei gewordenen Poren mit dem Korrosionsinhibitor oder mit seiner Lösung in einem Plastifizierungsmittel bei, wodurch die physikalisch-mechanischen Kennziffern der herzustellenden Schlauchfolie erhöht werden. Zweitens nimmt wegen einer an der Oberflächen der Schmelze unterhaltenen Druckdifferenz(einerseits ist das der Druck des Korrosionsinhibitors und andererseits das Vakuum) die Geschwindigkeit bedeutend zu, mit der der Inhibitor in die kontinuierlich zu extrudierende Polymerisatschmelze hinein diffundiert. Es findet eine Vergrößerung der Eindringtiefe des Inhibitors über die Dicke der Schmelze und dabei nur von einer Seite statt, d.h., es wird eine solche Struktur der Schlauchfolie geformt, bei der sich der Inhibitor beim Betrieb der Folie nur in Richtung des zu konservierenden Materials abscheiden wird. Durch Änderung der Druckdifferenz an der Oberfläche der Polymerisatschmelze wird es dabei möglich, eine Schlauchfolie mit vorgegebener Eindringtiefe und erforderlicher Konzentration des Korrosionsinhibitors über die Foliendicke herzustellen. Die zum Aufblasen des Folienschlauches verbrauchte Luft wird über den Kanal 26 abgeführt. Indem man die Blindwand 22 des Diffusors 21 in axialer Richtung verschiebt, regelt man die Vakuumgröße in der Kammer 8 und damit auch die Tiefe der Diffusion in die Folienmasse. Von außen wird die polymere Folie mit Druckluft abgekühlt, die dem Ringsammler 27 zugeführt wird.

Der erfindungsgemäße Spritzkopf gewährleistet die Formung der Schlauchfolie mit einer solchen Struktur, die die Korrosionsschutzeigenschaften der Folie bedeutend verbessert, weil die Korrosionsinhibitorabscheidung nur in den Folienschlauch hinein stattfindet und eine hohe Konzentration des Korrosionsinhibitors über die Foliendicke gesichert wird, und ermöglicht eine Erhöhung der Festigkeitswerte der Schlauchfolie. Eine solche Schlauchfolie weist die Eigenschaften einer doppelschichtigen Folie auf, die sich bei der Lagerung weder deformiert noch abschichtet.

Der erfindungsgemäße Spritzkopf gewährleistet die Herstellung einer polymeren Rostschutz-Schlauchfolie, die zur gleichzeitigen Konservierung und Verpackung von Metallerzeugnissen im Maschinen-, Werkzeugmaschinen-, Gerätebau, Werkzeug-und Vorrichtungsbau sowie in anderen Industriezweigen eine breite Anwendung findet.

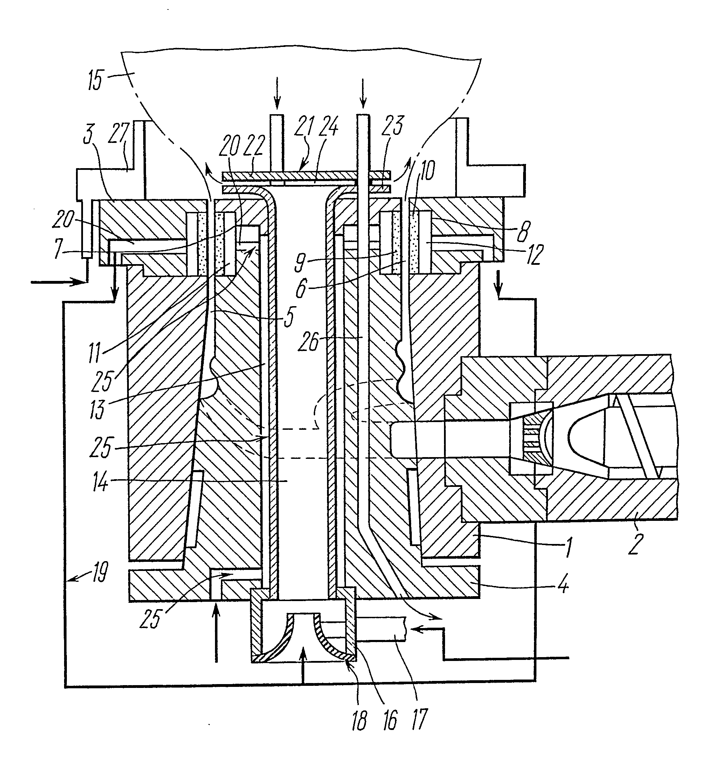

## Ansprüche

1. Spritzkopf zur Herstellung einer polymeren Rostschutz-Schlauchfolie, enthaltend einen Hohlkörper (1) mit einem Mundstück (3), einem im Hohlkörper (1) angeordneten und durch das Mundstück (3) geführten Dorn, dessen Aussenfläche sowie die Innenflächen des Hohlkörpers (1) und des Mundstückes (3) einen formgebenden Kanal (5) bilden, der in einen formgebenden Ringspalt (6) übergeht, in dessen Zone im Körper des Dornes (4) des Mundstückes (3) mit ihrem offenen Teil einander zugewandte Ringnuten (7,8) ausgeführt sind, in denen Buchsen (9, 10) aus einem für Korrosionsinhibitor oder für dessen Lösung in einem Plastifizierungsmittel durchlässigen Werkstoff untergebracht sind, wobei die Innenwände dieser Buchsen (9, 10) und die Wände der Nuten (7,8) Kammern bilden, dadurch **gekennzeichnet**, dass im Dorn (4) ein Hohlraum (13) vorgesehen ist, in dem koaxial zum Dorn (4) ein zylinderförmiges Rohr (14) zum Zuführen der Druckluft angeordnet ist, mit der die Polymerisatschmelze zu einem Folienschlauch (15) aufgeblassen wird, an einem der Enden des Rohres (14) mit ihrer Stirn eine mit dem Rohr (14) in Verbindung stehende und koaxial zu diesem angeordnete Schnecke (16) befestigt ist, die mindestens eine tangentiale Düse (17) zum Zuführen der Druckluft aufweist, wobei an der anderen vom Rohr (14) entfernten Stirn der Schnecke (16) eine Blende in Form eines koaxial zu dieser angeordneten Konfusors (18) montiert ist, welcher mit der Kammer (12) des Mundstückes (3) verbunden ist, während das andere Ende des Rohres (14) in Form eines Diffusors (21) ausgebildet und mit einer senkrecht zur Rohrachse angeordneten Blindwand (22) versehen ist, die mit der Wand des Diffusors (21) einen Schlitz (24) bildet, wobei im Dorn (4) mindestens ein mit der Dornkammer (11) in Verbindung stehender Kanal (25) zum Zuführen eines Korrosionsinhibitors oder seiner Lösung in einem Plastifizierungsmittel in diese Kammer (11) vorgesehen ist.

2. Spritzkopf nach Anspruch I, dadurch **gekennzeichnet**, dass die Blindwand (22) in der Längsrichtung der Rohrachse verschiebbar aus gebildet ist.

3. Spritzkopf nach Anspruch 1 oder 2, dadurch **gekennzeichnet,** daß ein Teil des erwähnten Kanals (25) zum Zuführen des Korrosionsinhibitors oder seiner Lösung in einem Plastifizierungsmittel in die Kammer (11) des Dornes (4) von der Oberfläche des Hohlraumes des Dornes (4) und von der Außenfläche des Rohres (14) gebildet ist, während der andere Teil des Kanals (25) im Körper des Dornes (4) ausgeführt ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-1 345 761 (TREFIMETAUX) <br> * Seite 1, linke Spalte, Zeilen 25-35; Seite 1, rechte Spalte, Zeile 27 - Seite 2, linke Spalte, Zeile 18; Figuren * <br> --- | 1-3 | B 29 C 47/20 <br> B 29 C 47/00 |
| A | US-A-4 485 062 (DU PONT) <br> * Spalte 2, Zeile 49 - Spalte 3, Zeile 19; Spalte 5, Zeilen 33-44; Figur 2 * <br> --- | 1-3 | |
| A | GB-A-2 188 274 (INSTITUT MEKHANIKI METALLOPOLIMERNYKH) <br> * Seite 2, Zeilen 8-54 * <br> ----- | 1-3 | |

RECHERCHIERTE
SACHGEBIETE (Int. Cl.5)

B 29 C

Der vorliegende Recherchenbericht wurde für alle Patentansprüche erstellt

| Recherchenort | Abschlußdatum der Recherche | Prüfer |
|---|---|---|
| DEN HAAG | 17-08-1989 | ATTALLA G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)